(19)

**Europäisches Patentamt**
**European Patent Office**
**Office européen des brevets**

(11) **EP 2 333 931 A2**

(12) **EUROPEAN PATENT APPLICATION**

(43) Date of publication:
**15.06.2011 Bulletin 2011/24**

(51) Int Cl.:
*H02J 9/06* (2006.01)   *G06F 1/30* (2006.01)

(21) Application number: **10015445.9**

(22) Date of filing: **08.12.2010**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **09.12.2009 JP 2009279900**

(71) Applicant: Sanyo Electric Co., Ltd.
**Osaka 570-8677 (JP)**

(72) Inventors:
• **Yamashita, Masanori**
  **Osaka 570-8677 (JP)**
• **Kabasawa, Takashi**
  **Osaka 570-8677 (JP)**
• **Honma, Hisanori**
  **Osaka 570-8677 (JP)**

(74) Representative: **Hertz, Oliver**
  **v. Bezold & Partner**
  **Patentanwälte**
  **Akademiestrasse 7**
  **80799 München (DE)**

(54) **Server uninterruptable power supply**

(57)   The server uninterruptible power supply is housed inside the server case (91), and is connected to the 12V DC power supply line (43) of the server. The uninterruptible power supply is provided with a DC/DC boost converter (3) that steps-up the power supply line (43) voltage to the rechargeable battery (1) charging voltage, rechargeable batteries (1) having a specified voltage of 13V to 60V, a DC/DC step-down converter (2) that steps-down the rechargeable battery (1) voltage to the voltage of the power supply line (43), and a charging and discharging control circuit (4) that controls the DC/DC boost converter (3) and the DC/DC step-down converter (2). In the event of commercial power source (95) outage, the uninterruptible power supply steps-down the rechargeable battery (1) output voltage to the voltage of the power supply line (43) and outputs that voltage to maintain operation of the server.

FIG. 3

**EP 2 333 931 A2**

**Description**

**BACKGROUND OF THE INVENTION**

1. Field of the Invention

The present invention relates to a server uninterruptible power supply (UPS) that is installed in the server case (rack, chassis, tower) to supply power to the server for a given time period in the event of power outage.

2. Description of the Related Art

A server (a computer that provides services used by other computers) is required to ensure normal operation during a power outage. To achieve this, an uninterruptible power supply has been developed that is setup outside the server. (Refer to Japanese Laid-Open Patent Publication 2006-42495.) This type of uninterruptible power supply contains rechargeable batteries such as lead-storage batteries and supplies alternating current (AC) to the server to replace the commercial AC power source during power outage. Accordingly, this uninterruptible power supply is connected to the commercial power input-side of the server, and during power outage outputs AC power that replaces the commercial power source. When this uninterruptible power supply detects power outage, it converts rechargeable battery output to AC with the same voltage as the commercial power source via a direct current-to-alternating current (DC-to-AC) inverter, and outputs that AC power to the server. Consequently during power outage, power output from the rechargeable batteries is converted to AC by the DC-to-AC inverter, AC is output to the server, the AC input to the server is converted to direct current (DC) with prescribed voltages by a power supply circuit inside the server, and the DC is supplied to power supply lines. Since this architecture supplies rechargeable battery output to the power supply lines through a DC-to-AC inverter as well as a power supply, it has the drawback that the utilization efficiency of power output from the rechargeable batteries is particularly low. Further, since this uninterruptible power supply is installed outside the server, it also has the drawback that it is inconvenient to use.

To resolve the drawbacks described above, an uninterruptible power supply that can be installed in the bottom section of a server case has been developed. (Refer to Japanese Laid-Open Patent Publication 2003-309935.)

In the server uninterruptible power supply of JP 2003-309935, power from the internally housed batteries is not converted to AC, but rather is converted to DC with the voltage of the power supply line via a DC/DC converter. Consequently, DC/DC converter output can be directly supplied to the server power supply line to increase battery power utilization efficiency. However, this uninterruptible power supply is provided with rechargeable batteries having a voltage that is lower than the server power supply line voltage. Therefore, it is necessary to step-up the rechargeable battery voltage through a DC/DC boost converter to supply power to the server power supply line during power outage. With this circuit architecture, not only is the power utilization efficiency of the rechargeable batteries reduced, but the rechargeable battery discharge current is also increased. Therefore, it becomes necessary to reduce the electrical resistance of the discharge lines, and detrimental requirements develop such as the need for extremely large diameter power supply line wiring. In particular for an uninterruptible power supply installed in the server case, it is especially important to achieve as high a power efficiency as possible. This is because the efficient supply of rechargeable battery power to the server during power outage can lengthen the server operating time and can reduce heat generation by the uninterruptible power supply. Uninterruptible power supply heat generation during power outage can certainly not be neglected. For example, if the uninterruptible power supply supplies 1 kW of power with a 90% efficiency, 100W of power is generated as heat that raises the ambient temperature. Further, since air conditioner operation typically stops during power outage, heat generation by both the uninterruptible power supply and the server is not effectively countered by cooling. Under these conditions, uninterruptible power supply heat generation must be reduced to the utmost to facilitate normal server operation. In particular for an uninterruptible power supply installed inside the server case, if the uninterruptible power supply heat generation from becomes significant, it will heat the server and stable server operation will not be ensured.

**SUMMARY OF THE INVENTION**

The present invention was developed with the object of correcting the drawbacks described above. Thus, it is a primary object of the present invention to provide a server uninterruptible power supply installed inside the server case that enables stable server operation during power outage.

Another important object of the present invention is to provide a server uninterruptible power supply that can efficiently supply power from the rechargeable batteries to the server power supply line while simplifying the power supply line wiring that delivers power from the rechargeable batteries. Still another important object of the present invention is to provide a server uninterruptible power supply that can be conveniently used by being housed inside the server case.

The server uninterruptible power supply of the present invention is installed inside the server case 91, and is provided with rechargeable batteries 1 that are connected to the 12V DC power supply line 43 of the server 90 through DC/DC converters. The rechargeable batteries 1 are charged via the power supply line 43 and supply power to the power supply line 43. The uninterruptible power supply is provided with a DC/DC boost converter 3 connected to the server 90 power supply line 43 that steps-up the power supply line 43 voltage to a voltage for charging the rechargeable batteries 1, rechargeable batteries 1 having a specified voltage of 13V to 60V that are charged by the DC/DC boost converter 3, a DC/DC step-down converter 2 that steps-down the rechargeable battery 1 voltage to the voltage of the power supply line 43 and outputs that voltage to the server 90 power supply line 43, and a charging and discharging control circuit 4 that controls the DC/DC boost converter 3 and the DC/DC step-down converter 2. In the event of power outage from the commercial power source 95 that supplies power to the server 90, the uninterruptible power supply steps-down the rechargeable battery 1 output voltage to the voltage of the server 90 power supply line 43 via the DC/DC step-down converter 2, and outputs that voltage to the power supply line 43 to maintain operation of the server 90.

The uninterruptible power supply described above has the characteristic that even though it is conveniently housed in the server case, it can maintain stable server operation during power outage. This is because the voltage of the rechargeable batteries is made greater than the 12V power supply line, and rechargeable battery voltage is stepped-down via the DC/DC step-down converter to supply power to the server power supply line during power outage. Power can be supplied to the power supply line by controlling the duty cycle of the DC/DC step-down converter. The DC/DC step-down converter supplies power from the rechargeable batteries to the power supply line and cuts-off the supply of power repeatedly with a given period. Specifically, the DC/DC step-down converter can supply power to the power supply line by controlling the ON and OFF periods or duty cycle of a switching device connected between the rechargeable batteries and the power supply line. A DC/DC step-down converter that supplies power in this manner can efficiently supply rechargeable battery power to the power supply line when the switching device is ON. It can also control the average power supplied by controlling the OFF period of the switching device. Therefore, power can be supplied from the rechargeable batteries to the power supply line in an extremely efficient manner. When the switching device is switched ON, the power loss generated by supplying power from the rechargeable batteries to the power supply line is due only to the ON-resistance of the switching device. Consequently by using a switching device with a small ON-resistance, the power loss resulting from the supply of power from the rechargeable batteries to the power supply line can be made extremely small. In contrast for the case of a DC/DC boost converter used to supply power to the power supply line, power output from the rechargeable batteries must be stored in an inductance coil or the voltage must be stepped-up through a transformer. In a circuit configuration that stores power in an inductance coil, the power loss cannot be reduced to zero by timing conduction in the coil. In a circuit configuration that steps-up voltage through a transformer, 100% transformer efficiency can also not be attained. These are among the factors that cause reduced power efficiency in a DC/DC boost converter.

The DC/DC step-down converter can supply rechargeable battery power to the server power supply line extremely efficiently with a very simple circuit structure to achieve exceptionally high power efficiency. The power efficiency determines the amount of heat generated when the uninterruptible power supply is operating. An uninterruptible power supply with a power efficiency of 90% will increase ambient temperature by generating heat that is 10% of power output from the rechargeable batteries. Specifically, lost power that is not supplied to the power supply line is generated as heat by the uninterruptible power supply. Since the power efficiency of the uninterruptible power supply described above can be extremely high, the amount of heat generated by supplying power from the rechargeable batteries to the server power supply line during power outage can be reduced. Consequently during power outage, thermal energy from the uninterruptible power supply that would heat the server, which itself also generates heat, can be reduced to allow stable server operation.

In addition, the uninterruptible power supply described above achieves the characteristic that power can be efficiently supplied from the rechargeable batteries to the server power supply line while simplifying power supply line wiring that supplies rechargeable battery power. This is because rechargeable battery voltage is stepped-down to supply the server power supply line, and consequently, rechargeable battery discharge current can be made smaller than the current in the server power supply line. This is particularly important for a high-power server. This is because high currents flow in the power supply line for a high-power server and rechargeable battery current also becomes high. For example, since a 1kW server has a current flow near 100A in the 12V power supply line, the rechargeable battery current in a circuit structure that supplies stepped-up rechargeable battery voltage must be still higher than that. However, by making the rechargeable battery voltage twice the voltage of the power supply line in the uninterruptible power supply described above, the rechargeable battery current can be significantly lowered to half the current in the power supply line.

Further, the uninterruptible power supply described above does not convert rechargeable battery output to AC, but rather outputs power that is converted to the DC voltage of the server power supply line by a DC/DC step-down converter. Therefore, rechargeable battery output can be still more efficiently supplied to the server. This achieves the characteristic that not only can uninterruptible power supply heat generation be reduced, but rechargeable battery operating time of the server can also be increased.

Further, since the rechargeable battery voltage in the uninterruptible power supply described above is set below 60V, use of electronic components that can withstand high voltages (high voltage rating) is not required for parts such as switching devices in the DC/DC boost converter and DC/DC step-down converter. Therefore, power loss can be reduced at the component level to achieve the characteristic that power efficiency can be increased while using inexpensive parts. Electronic components with a high voltage rating are not only expensive, but also have increased ON-resistance resulting in higher power loss due to their high-voltage structure.

In the server uninterruptible power supply of the present invention, the server 90, which is loaded in the server case 91 in a removable manner, can be a plurality of blade servers 50 or rack servers 51. The uninterruptible power supply can house a DC/DC boost converter 3, rechargeable batteries 1, a DC/DC step-down converter 2, and a charging and discharging control circuit 4 inside an external case 11, 21, 31, 71, which can be loaded in a removable manner in the server case 91 in place of a blade server 50, a rack server 51, or a power source unit 60, 80. Since this uninterruptible power supply can be easily loaded in the server case in place of a blade server, a rack server, or a power source unit, it has the characteristic that it can be extremely conveniently used by loading it in place of a blade server, a rack server, or a power source unit in a server case that is not specially designed to hold a uninterruptible power supply.

In the server uninterruptible power supply of the present invention, the charging and discharging control circuit 4 can control the DC/DC step-down converter 2 to switch between an inactive state when there is no power outage and an operating state when power outage occurs. In this uninterruptible power supply, since the DC/DC step-down converter is put in an inactive state when there is no power outage, unnecessary power consumption can be reduced to the extreme when there is no power outage.

In the server uninterruptible power supply of the present invention, the charging and discharging control circuit 4 can detect a power-out-signal input from the server 90 to switch the DC/DC step-down converter 2 to the operating state. In this uninterruptible power supply, since the DC/DC step-down converter is switched to the operating state by a server power-out-signal, it has the characteristic that special circuitry and wiring to switch the DC/DC step-down converter to the operating state is unnecessary, it can be easily installed in the server case, and power consumption can be reduced in the inactive state.

In the server uninterruptible power supply of the present invention, the charging and discharging control circuit 4 can detect a power-out-signal sent by wire or wirelessly from a power-out detection circuit 97 connected to the commercial power source 95 AC line 96 to switch the DC/DC step-down converter 2 to the operating state. In this uninterruptible power supply, a commercial power outage can be instantaneously detected by the power-out detection circuit connected to the commercial power AC line. Consequently, a power-out-signal sent by wire or wirelessly from the power-out detection circuit can be detected by the charging and discharging control circuit to quickly switch the DC/DC step-down converter to the operating state.

The server uninterruptible power supply of the present invention can have rechargeable batteries 1 with a total specified voltage of 30V-50V. In this uninterruptible power supply, since rechargeable battery voltage is approximately more than three times the voltage of the power supply line, it has the characteristic that rechargeable battery current can be reduced to approximately one third the current in the power supply line allowing power supply wiring to be simplified. Further, since rechargeable battery voltage is not more than 50V, inexpensive electronic components with low voltage rating can be used and device ON-resistance can be reduced to limit power loss.

In the server uninterruptible power supply of the present invention, the rechargeable batteries 1 can be a series connection of a plurality of battery cells 5 that are either nickel hydride batteries or lithium ion batteries. In this uninterruptible power supply, since small, lightweight, high capacity nickel hydride batteries or lithium ion batteries are used, the uninterruptible power supply can fit in the server case while the operating time of a high-power server can be lengthened.

In the server uninterruptible power supply of the present invention, the external case 21, 71 can be provided with a cooling fan 24, 74 to afford forced ventilation of the air inside. Since this uninterruptible power supply can be cooled by forced ventilation with the cooling fan, temperature rise during uninterruptible power supply operation can be reduced.

The above and further objects of the present invention as well as the features thereof will become more apparent from the following detailed description to be made in conjunction with the accompanying drawings.

**BRIEF DESCRIPTION OF THE DRAWINGS**

Fig. 1 is an oblique view of a server installed with an uninterruptible power supply for an embodiment of the present invention;

> Fig. 2 is a vertical cross-section view of the server shown in Fig. 1;
> Fig. 3 is a block diagram of the server shown in Fig. 1;
> Fig. 4 is a block diagram of another example of a server;
> Fig. 5 is a block diagram of another example of a server;
> Fig. 6 is a block diagram of another example of a server;
> Fig. 7 is an oblique view of an uninterruptible power supply for an embodiment of the present invention;
> Fig. 8 is an exploded oblique view of the uninterruptible power supply shown in Fig. 7 viewed from behind;
Fig. 9 is an oblique view of an uninterruptible power supply for another embodiment of the present invention;
Fig. 10 is an exploded oblique view of the uninterruptible power supply shown in Fig. 9 viewed from behind;
Fig. 11 is an oblique view of an uninterruptible power supply for another embodiment of the present invention;
Fig. 12 is an exploded oblique view of the uninterruptible power supply shown in Fig. 11 viewed from behind;
Fig. 13 is an oblique view of an uninterruptible power supply for another embodiment of the present invention; and
Fig. 14 is an exploded oblique view of the uninterruptible power supply shown in Fig. 13 viewed from behind.

## DETAILED DESCRIPTION OF THE EMBODIMENT(S)

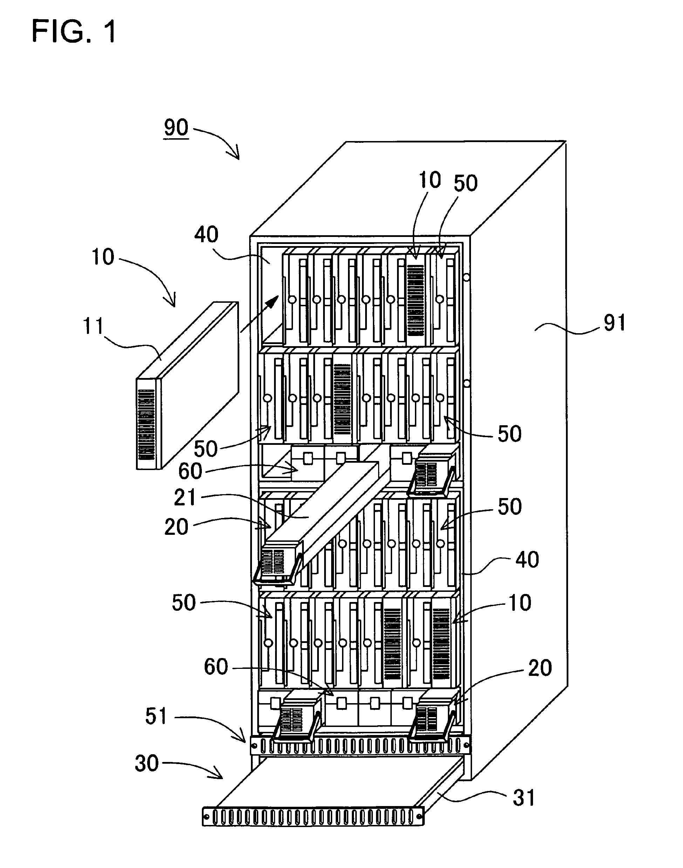

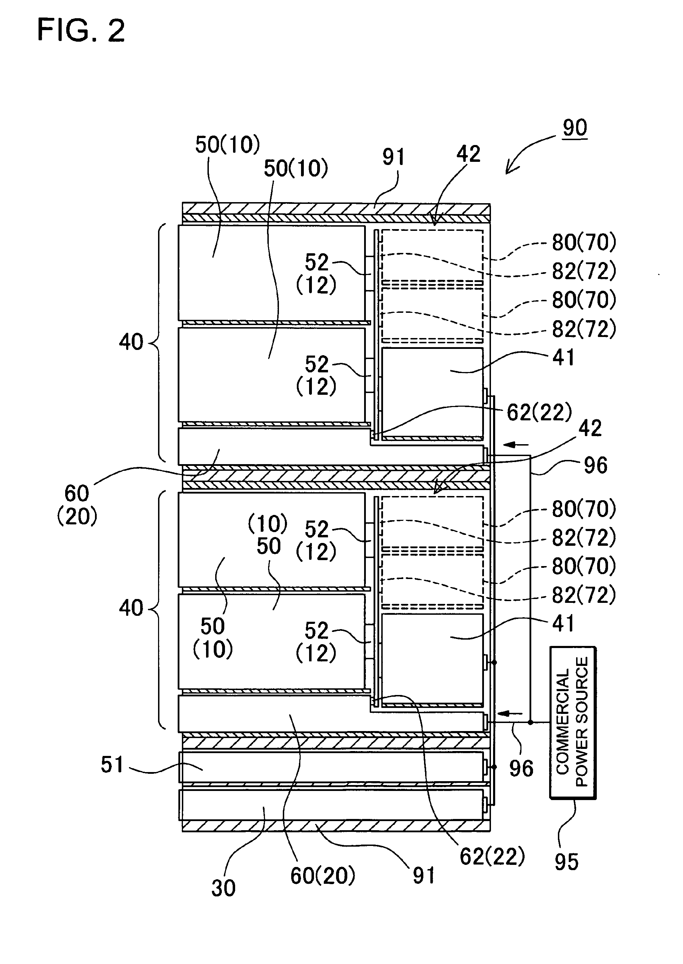

The following describes embodiments of the present invention based on the figures.
The server 90 shown in Figs. 1 and 2 has a plurality of blade servers 50 and rack servers 51 loaded in a removable manner in a server case 91. The plurality of blade servers 50 are housed in enclosures 40, and those enclosures 40 are contained in the server case 91. An enclosure 40 has a plurality of blade servers 50 loaded in a removable manner, and a plurality of power source units 60 to supply power to the blade servers 50 loaded in a removable manner in the lower part of the enclosure 40. Rack servers 51 are loaded in a removable manner in the bottom section of the server case 91. Uninterruptible power supplies 10, 20, 30 are loaded in a removable manner in the server case 91 in place of blade servers 50, power source units 60, or rack servers 51 to supply power to blade servers 50 and rack servers 51 and maintain server 90 operation for a given time period. The time period that the uninterruptible power supply 10, 20, 30 maintains server 90 operation during power outage is longer than the time required to properly shutdown the server 90 and is, for example, from 2min to 10min. An enclosure 40 has a plurality of blade server 50 rows (two rows in the figures) that allow a plurality of columns of blade server 50 to be housed. Further, the enclosures 40 in the figures are configured to allow a plurality of power source units 60 to be housed in a horizontal row beneath the blade servers 50.
The server case 91 of the figures is configured to hold a plurality of blade servers 50 loaded in a plurality of enclosures 40 that are loaded in a removable manner. Since all the positions in the server case 91 enclosures 40 are not taken up by blade servers 50, uninterruptible power supplies 10 can be loaded in place of blade servers 50 in the vacant positions. In addition, the server case 91 of the figures is configured to hold a plurality of rack servers 51 in the bottom section, and uninterruptible power supplies 30 can be loaded in place of rack servers 51.
The number of uninterruptible power supplies 10, 20, 30 mounted in the server case 91 is determined by number of uninterruptible power supplies 10, 20, 30 that can maintain server 90 operation for a given time period during power outage. When a single uninterruptible power supply 10, 20, 30 cannot maintain server 90 operation for a given time period, a plurality of uninterruptible power supplies 10, 20, 30 are installed. A plurality of uninterruptible power supplies 10, 20, 30 is connected in parallel to supply power to the server 90 and maintain its operation for a given period. For example, for a server with 1 kW power consumption, at least two 500W uninterruptible power supplies can be loaded in the server case to maintain server operation for a given period.
An uninterruptible power supply 10, 20, 30 is provided with an external case 11, 21, 31 and a connecting section 12, 22, 32 that allows it to be loaded in a removable manner in an enclosure 40 replacing a blade server 50 or power source unit 60, or to be loaded in a removable manner in the server case 91 replacing a rack server 51. With the external case 11, 21, 31 loaded in a designated position in the enclosure 40 or server case 91, the connecting section 12, 22, 32 connects the uninterruptible power supply 10, 20, 30 to the server 90 power supply line 43.
As shown in Fig. 2, the backside of the server case 91 is provided with interconnect bays 41 that hold wiring such as bus wires, communication lines 7, and power supply lines 43 connected to the blade servers 50 and power source units 60 loaded in front of the interconnect bays 41. The blade servers 50 and power source units 60 are provided with connecting sections 52, 62 made up of connectors and connecting terminals that connect to the interconnect bays 41 when the blade servers 50 and power source units 60 are loaded in designated positions in the server case 91. The blade servers 50 and power source units 60 are connected to the interconnect bays 41 via the connecting sections 52, 62. Similarly, uninterruptible power supplies 10, 20 that replace blade servers 50 and power source units 60 in designated positions in the server case 91 are provided with connecting sections 12, 22 that connect to the interconnect bays 41.

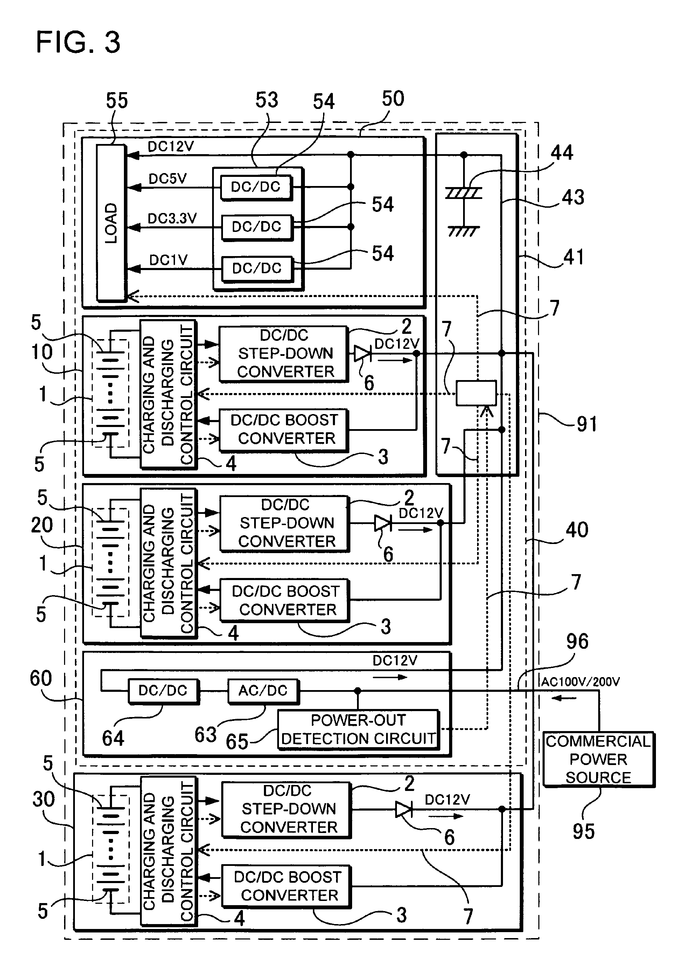

Fig. 3 shows a block diagram of the server 90. The server 90 shown in this figure is provided with a power source unit 60 that supplies power input from the AC power source 95 to the blade server 50 power supply line 43. The power source unit 60 is provided with an AC/DC conversion circuit 63 that converts power input from the AC power source 95 to DC, and a DC/DC converter 64 that converts the DC output from the AC/DC conversion circuit 63 to 12V DC that is output to the blade server 50 power supply line 43. The blade server 50 in the server 90 of this figure houses a power supply circuit 53. The power supply circuit 53 contains DC/DC sub-converters 54 that convert the DC voltage supplied from the power source unit 60 to voltages that are most appropriate for the blade server 50 internal load, which is the blade server 50 internal circuitry. In the server 90 of the figure, the voltage supplied from the power source unit 60 to the blade server 50 power supply line 43 is 12V, and the blade server 50 houses DC/DC sub-converters 54 that convert that 12V to 5V, 3.3V, and 1V. Although not illustrated, a rack server 51 can be configured in the same manner as the blade server 50 to convert 12V supplied from the power source unit 60 to the rack server 51 power supply line to optimal voltages for the rack server 51 internal circuit load.

An uninterruptible power supply 10, 20, 30 is provided with rechargeable batteries 1, a DC/DC step-down converter 2 that steps-down the rechargeable battery 1 output voltage to the voltage of the DC supplied to the server 90 power supply line 43, a DC/DC boost converter 3 that steps-up the voltage of the power supply line 43 to the rechargeable battery 1 charging voltage, and a charging and discharging control circuit 4 that controls the DC/DC step-down converter 2 and the DC/DC boost converter 3.

The rechargeable batteries 1 have a plurality of battery cells 5 connected in series to attain a total specified voltage that is greater than the 12V server 90 power supply line 43, and more specifically is greater than or equal to 13V and less than 60V. If the specified voltage is less than 13V, rechargeable battery 1 voltage cannot be supplied to the server 90 power supply line 43 by stepping-down the voltage. Conversely, if the voltage is greater than 60V, electronic components with a high voltage rating must be used in the DC/DC step-down converter 2 and DC/DC boost converter 3 and power loss is increased as a result. By increasing the voltage of the rechargeable batteries 1, the average rechargeable battery current supplied to the server 90 power supply line 43 can be reduced. Accordingly, the specified voltage of the rechargeable batteries 1 is preferably greater than 30V, and ideally greater than 35V. In this case, the average rechargeable battery 1 current supplied to the server 90 power supply line 43 can be reduced to approximately one third the current in the power supply line 43. Further, rechargeable battery 1 voltage is preferably less than 50V to allow electronic component voltage rating to be reduced.

Nickel hydride batteries or lithium ion batteries are used as the battery cells 5 in the rechargeable batteries 1. The rechargeable batteries 1 are designed to have a capacity that can continuously output, for example, 400W to 2kW of power to the server 90 power supply line 43 for a 2min to 10min period.

The DC/DC step-down converter 2 steps-down rechargeable battery 1 output to a voltage that can be supplied to the server 90 power supply line 43, which is 12V. The output voltage of the DC/DC step-down converter 2 is set to a voltage range of 12V±0.5V. In the uninterruptible power supplies 10, 20, 30 of the figures, a diode 6 is connected to the output-side of the DC/DC step-down converter 2 to prevent reverse current flow.

The DC/DC boost converter 3 steps-up the server 90 power supply line 43 12V DC and outputs a voltage for charging of the rechargeable batteries 1. The DC/DC boost converter 3 contains an output current stabilizing circuit. A DC/DC boost converter 3 that charges nickel hydride battery cells limits battery cell charging current to a given value via a constant current circuit. A DC/DC boost converter 3 that charges lithium ion battery cells contains a constant voltage-constant current circuit and charges while limiting the rise in rechargeable battery voltage. The output current of the DC/DC boost converter 3 is significantly smaller than the output current of the DC/DC step-down converter 2 that supplies power to the power supply line 43. For example, DC/DC boost converter 3 output current is set from 0.5A to 1A. This is because the rechargeable batteries 1 can be charged over a long time period. A DC/DC boost converter 3 with low output current can be made small and generate little heat.

The charging and discharging control circuit 4 detects rechargeable battery 1 remaining capacity and controls the DC/DC boost converter 3, or controls a charging switch provided at the output-side of the DC/DC boost converter 3, to continuously maintain rechargeable battery 1 remaining capacity within a set range. As time elapses and the rechargeable batteries 1 discharge to a remaining capacity below the set range, the charging and discharging control circuit 4 activates the DC/DC boost converter 3, or switches ON the charging switch connected to the output-side of the DC/DC boost converter 3, to charge the rechargeable batteries 1. When the remaining capacity rises to a set value, operation of the DC/DC boost converter 3 is stopped, or the charging switch is switched OFF to stop charging while maintaining the DC/DC boost converter in the operating state. For example, the charging and discharging control circuit 4 controls DC/DC boost converter 3 operation or the charging switch to maintain rechargeable battery 1 remaining capacity between 80% and 100%. In addition, the charging and discharging control circuit 4 controls the DC/DC step-down converter 2 to prevent over-discharging the rechargeable batteries 1. During power outage when rechargeable batteries 1 are discharged to supply power to the server 90, if the remaining capacity of the rechargeable batteries 1 drops to a minimum capacity, DC/DC step-down converter 2 operation is suspended to stop rechargeable battery 1 discharge.

The charging and discharging control circuit 4 detects commercial power source 95 outage and switches the DC/DC step-down converter 2 to the operating state. The charging and discharging control circuit 4 does not activate the DC/DC step-down converter 2 to the operating state when there is no power outage. Specifically, when there is no power outage, the DC/DC step-down converter 2 is maintained in a non-operating (inactive) state. Even under no-load conditions, the DC/DC step-down converter 2 consumes considerable power in the operating state. For example, if the DC/DC step-down converter 2 consumes 2% of the specified output power under no-load conditions, 10W of power will be consumed in the operating state with no load when the specified output is 500W. This power is continuously consumed as wasted power in the operating state. To prevent this drawback, the charging and discharging control circuit 4 only switches the DC/DC step-down converter 2 to the operating state when there is a commercial power source 95 outage and no 12V DC can be output from the server 90 power source unit 60 to the power supply line 43. A DC/DC step-down converter 2 that has been switched to the operating state steps-down the rechargeable battery 1 output voltage to 12V and supplies that power to the power supply line 43 to maintain server 90 operation.

Note the DC/DC step-down converter 2 does not switch to the operational state by detecting voltage drop in the server 90 power supply line 43 due to commercial power source 95 outage. Rather, the charging and discharging control circuit 4 switches the DC/DC step-down converter 2 to the operational state as a result of a power-out-signal input from the server 90. The server 90 houses a power-out detection circuit 65 that instantaneously detects commercial power source 95 outage. When power outage is detected, the server 90 power-out detection circuit 65 issues a power-out-signal to the uninterruptible power supply 10, 20, 30 charging and discharging control circuit 4. The charging and discharging control circuit 4 is connected to the server 90 by a communication line 7 to input power-out-signals from the server 90. Since this uninterruptible power supply 10, 20, 30 does not need to detect commercial power source 95 outage, it does not have to be connected to the commercial power source 95 AC line 96. However, in the uninterruptible power supply of the present invention, the charging and discharging control circuit can also be provided with a circuit to detect commercial power outage.

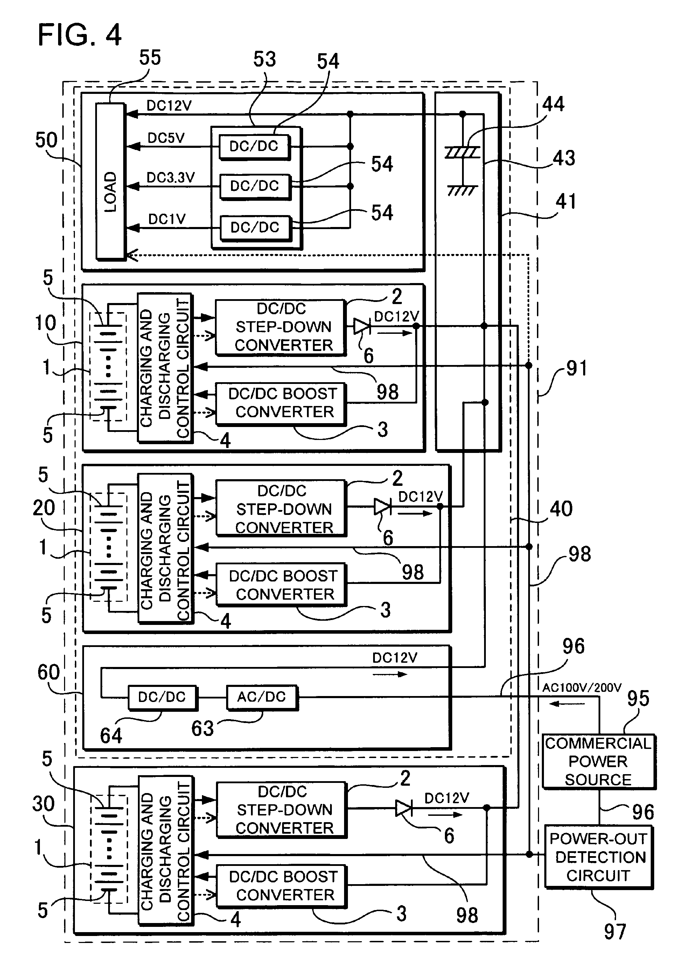

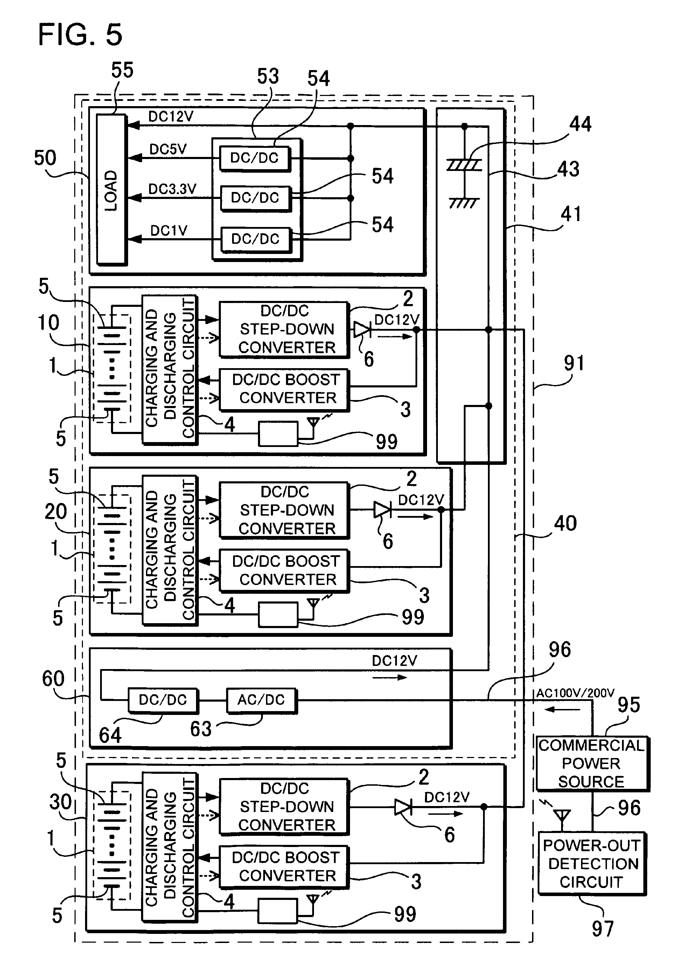

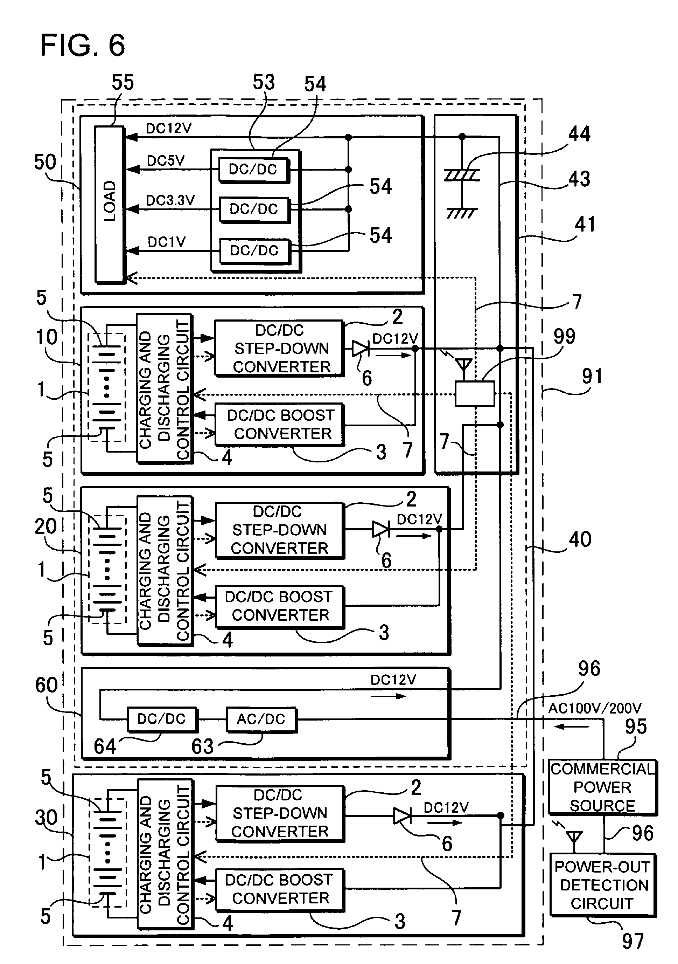

Further, as shown in Figs. 4 and 5, the uninterruptible power supply 10, 20, 30 can also have a power-out-signal sent via wires or wirelessly from a power-out detection circuit 97, which is connected to the commercial power source 95 AC line 96 to detect power outage. The power-out-signal is detected by the charging and discharging control circuit 4 to switch the DC/DC step-down converter 2 to the operational state. The power-out detection circuit 97 of the figures is not housed inside the server 90, but rather is directly connected to the commercial power source 95 to detect power outage outside the server 90. Although not illustrated, this power-out detection circuit 97 is connected to a commercial power source 95 outlet via a plug. The power-out detection circuit 97 issues a power-out-signal when commercial power source 95 outage is detected. As shown in Fig. 4, the power-out-signal from the power-out detection circuit 97 is input to an uninterruptible power supply 10, 20, 30 charging and discharging control circuit 4 via communication line 98 wires. Or, as shown in Fig. 5, the power-out-signal is sent to an uninterruptible power supply 10, 20, 30 charging and discharging control circuit 4 as a wireless signal. Each uninterruptible power supply 10, 20, 30 of Fig. 5 houses a receiver 99 to receive a wireless signal sent from the power-out detection circuit 97, and this receiver 99 receives a wireless signal and inputs it to the charging and discharging control circuit 4. However, as shown in Fig. 6, the wireless signal sent from the power-out detection circuit 97 can also be received at the server-side in an interconnect bay 41, and subsequently sent to uninterruptible power supply 10, 20, 30 charging and discharging control circuits 4 via communication lines 7. In the configurations described above, commercial power source 95 outage is instantaneously detected by a power-out detection circuit 97 directly connected to the commercial power source 95 outside the server 90, and a power-out-signal is sent from the power-out detection circuit 97 to a plurality of uninterruptible power supplies 10, 20, 30.

The server 90 and the charging and discharging control circuit 4 quickly detect commercial power source 95 outage and promptly switch the DC/DC step-down converter 2 to the operating state. When commercial power source 95 outage occurs and 12V DC cannot be output from the server 90 power source unit 60 to the power supply line 43, the voltage of the power supply line 43 gradually decays. During power outage, before the voltage in the power supply line 43 drops below a set voltage, the uninterruptible power supply 10, 20, 30 activates the DC/DC step-down converter 2 to supply power to the power supply line 43. Since a high capacitance electrolytic capacitor 44 is connected to the server 90 power supply line 43, voltage does not drop instantaneously during power outage. The charging and discharging control circuit 4 switches the DC/DC step-down converter 2 to the operational state prior to the voltage in the electrolytic capacitor 44 connected power supply line 43 dropping to the set voltage, which is the minimum voltage for normal server 90 operation. Accordingly, power is supplied from the rechargeable batteries 1 to the power supply line 43 to maintain server 90 operation even after power outage. During power outage, the activated DC/DC step-down converter 2 supplies server operating power from the rechargeable batteries 1 to the server 90 power supply line 43. In this state, the server 90 performs designated processing including shutdown operations and then powers-down. The rechargeable batteries 1 continue to supply operating voltage to the power supply line 43 until the server 90 has completed the designated processing including shutdown. After the server 90 has completed the designated processing and switched the power source OFF, the charging and discharging control circuit 4 stops DC/DC step-down converter 2 operation, or the charging and discharging control circuit 4 stops DC/DC step-down converter 2 operation when rechargeable battery 1 remaining capacity drops below the minimum capacity.

After power outage has been detected, the charging and discharging control circuit 4 also switches the DC/DC boost converter 3 to a non-operating (inactive) state. Since the output of the DC/DC boost converter 3 is fairly small compared to the output of the DC/DC step-down converter 2, its no-load power consumption is small. For example, a DC/DC boost converter 3 that charges 36V rechargeable batteries 1 with 0.5A has a rather small power specification of 18W. Accordingly, the no-load power consumption of this DC/DC boost converter 3 is quite small. For example, even if 5% of the specified power is consumed under no-load conditions, the consumed power is no more than 0.9W. However, if this DC/DC boost converter 3 is in the operating state during power outage, regardless of the small amount of power consumed, it still consumes power. Furthermore, since the DC/DC boost converter 3 is not put in an operational state to charge the rechargeable batteries 1 during a power outage, the charging and discharging control circuit 4 switches the DC/DC boost converter 3 to a non-operating state when power outage is detected. However, since the time the server 90 is supplied with power during power outage is a short period such as 2min to 10min, it is also possible to leave the DC/DC boost converter 3 in the operating state during that time period.

The power-out detection circuit 65 is housed in the server 90 and instantaneously detects commercial power source 95 outage. The server 90 shown in Fig. 3 houses the power-out detection circuit 65 in the power source unit 60. However, the power-out detection circuit can also be housed in an interconnect bay. Further, as shown in Figs. 4-6, the power-out detection circuit 97 can also be connected outside the server 90 to the commercial power source 95 AC line 96 to instantaneously detect power outage. Although not illustrated, the power-out detection circuit 65, 97 has an integrating circuit or differentiating circuit that shifts the phase of the commercial power source 95 AC by 90° to generate a phase-shifted signal. The phase-shifted signal and the AC signal input from the commercial power source 95 are both squared by separate squaring circuits, and adding the separate squaring circuit outputs in an adder circuit allows commercial power source 95 outage to be quickly detected. When the AC input signal from the commercial power source 95 to the power-out detection circuit 65, 97 is Asinω, a DC voltage of $A^2$ is output by implementing the equation below. In other words, AC is input and DC is output.

$$(A\sin\omega)^2 + (A\cos\omega)^2 = A^2$$

In this equation, A is the peak voltage of the commercial power source 95 signal. In this power-out detection circuit 65, 97, the adder circuit outputs a constant DC voltage ($A^2$) when power is input from the commercial power source 95. However, when power outage occurs and the commercial power source 95 input waveform varies from sinusoidal, the output voltage immediately changes allowing power outage to be detected. Specifically, power outage is detected by instantaneously determining whether or not the commercial power source 95 input varies according to a sine-wave with a given period and amplitude (voltage). If the power-out detection circuit 65, 97 detects commercial power source 95 outage, it sends a power-out-signal to the uninterruptible power supply 10, 20, 30 charging and discharging control circuit 4 via communication line 7, 98 wires or wirelessly.

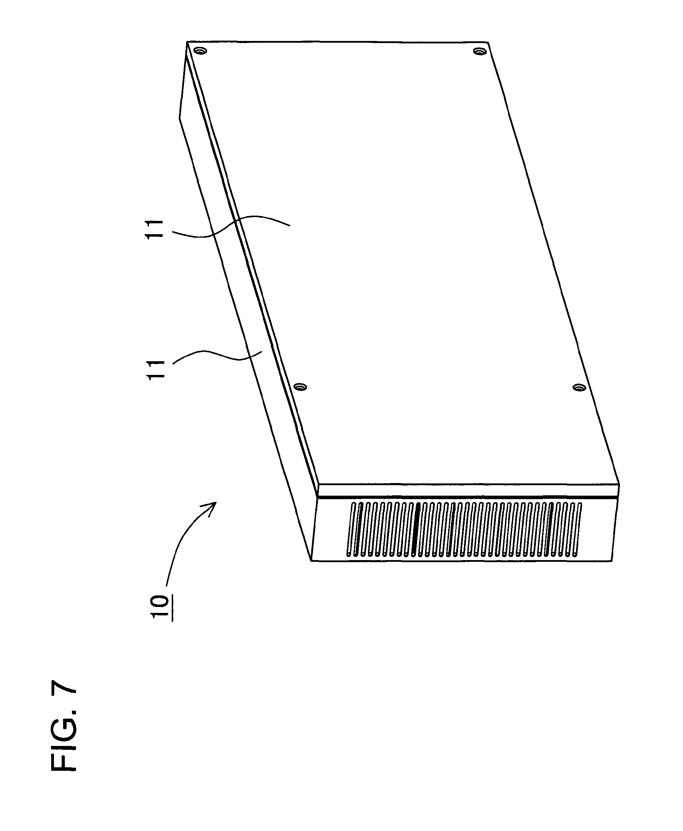

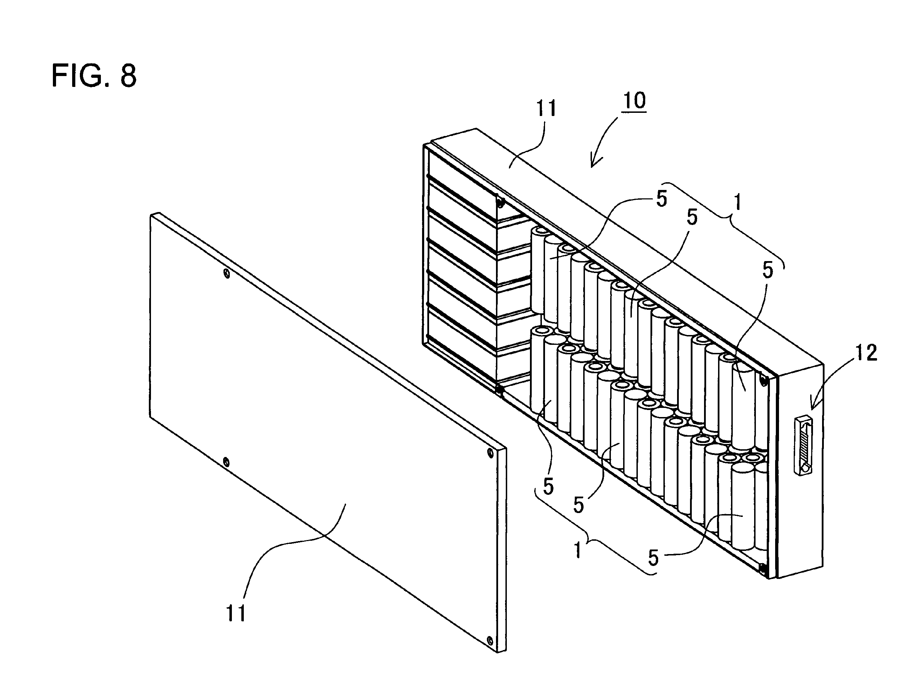

Figs. 7 and 8 show an uninterruptible power supply 10 used in place of a blade server 50. This uninterruptible power supply 10 houses a circuit board implementing a charging and discharging control circuit (not illustrated), a DC/DC step-down converter (not illustrated), and a DC/DC boost converter (not illustrated) in the front part of the external case 11, and contains rechargeable batteries 1 made up of a plurality of battery cells 5 in the back part. The uninterruptible power supply 10 of the figures holds a plurality of battery cells 5 disposed on two levels in upper and lower rows. This uninterruptible power supply 10 can hold many battery cells 5 for a high charging capacity. Therefore, many blade servers 50 with high power consumption can be maintained in an operating state continuously for a long period during power outage. As shown in Figs. 1 and 2, this uninterruptible power supply 10 is loaded in the upper part of an enclosure 40 in place of a blade server 50.

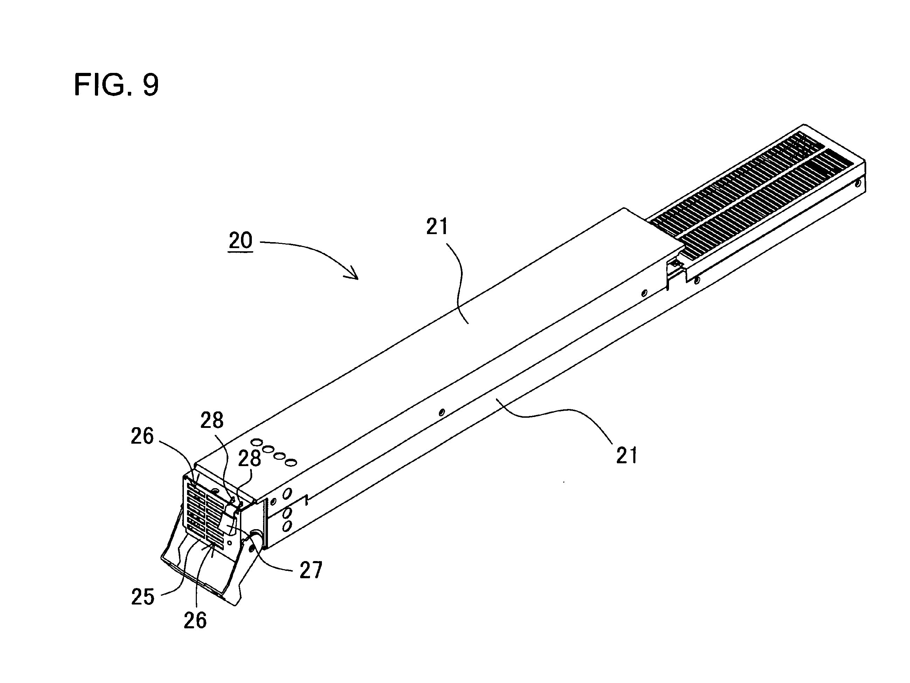

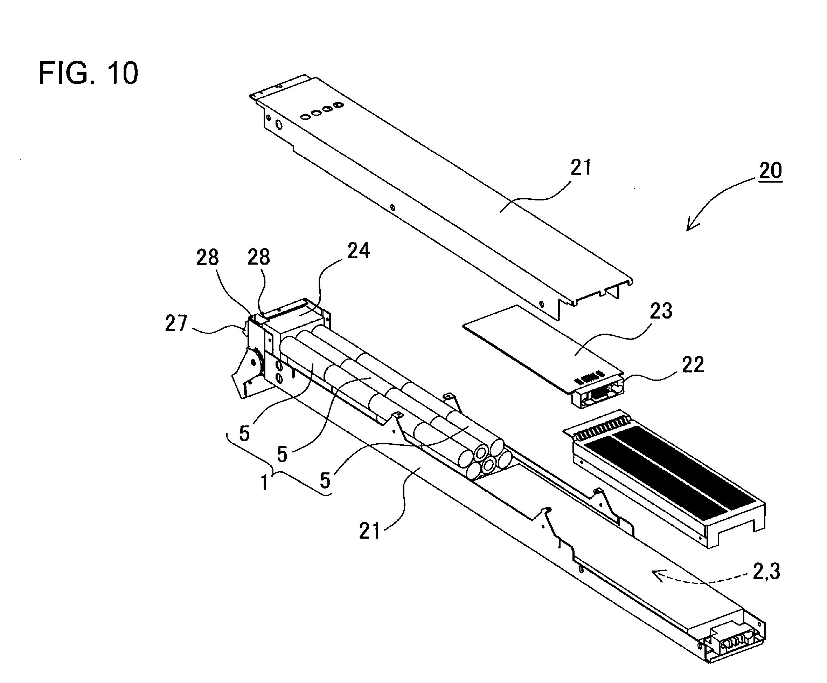

Figs. 9 and 10 show an uninterruptible power supply 20 that is loaded in place of a power source unit 60. This uninterruptible power supply 20 houses rechargeable batteries 1 made up of a plurality of battery cells 5 in the front part of the external case 21, and houses the DC/DC step-down converter 2 and DC/DC boost converter 3 in the back part. The charging and discharging control circuit (not illustrated) is implemented by an internally housed circuit board 23. As shown in Figs. 1 and 2, this uninterruptible power supply 20 is loaded in the lower part of an enclosure 40 in place of a power source unit 60. In this uninterruptible power supply 20, the front end of the external case 21 is provided with a cooling fan 24, and heat generating elements such as switching device field effect transistors (FETs) in the DC/DC step-down converter 2 and DC/DC boost converter 3, rectifying diodes, and rechargeable batteries 1 are cooled by cooling fan 24 forced ventilation. The front end of the external case 21 is provided with numerous openings 26 in a front panel 25 to pass air ingested or discharged by the cooling fan 24 at the front of the external case 21.

Further, the front end of the external case 21 of the figures is provided with a locking lever 27 to lock the uninterruptible power supply 20 in place in an enclosure 40. This locking lever 27 is made of flexible sheet-metal and locking hooks 28 flexibly protrude from a side (top) of the external case 21. The locking hooks 28 interlock with locking catches (not illustrated) established in the enclosure 40 to prevent the uninterruptible power supply 20 from sliding out of the enclosure 40. This uninterruptible power supply 20 can be removed from the enclosure 40 by operating the locking lever 27 to release the locking hooks 28.

The uninterruptible power supply 10, 20 described above is loaded in an enclosure 40 in place of a blade server 50 or a power source unit 60, and is provided with a connecting section 12, 22 that connects to the interconnect bay 41 established in the enclosure 40. The connecting section 12, 22 is provided at the back of the external case 11, 21, and is connected to the interconnect bay 41 when the uninterruptible power supply 10, 20 is loaded in place in the enclosure 40.

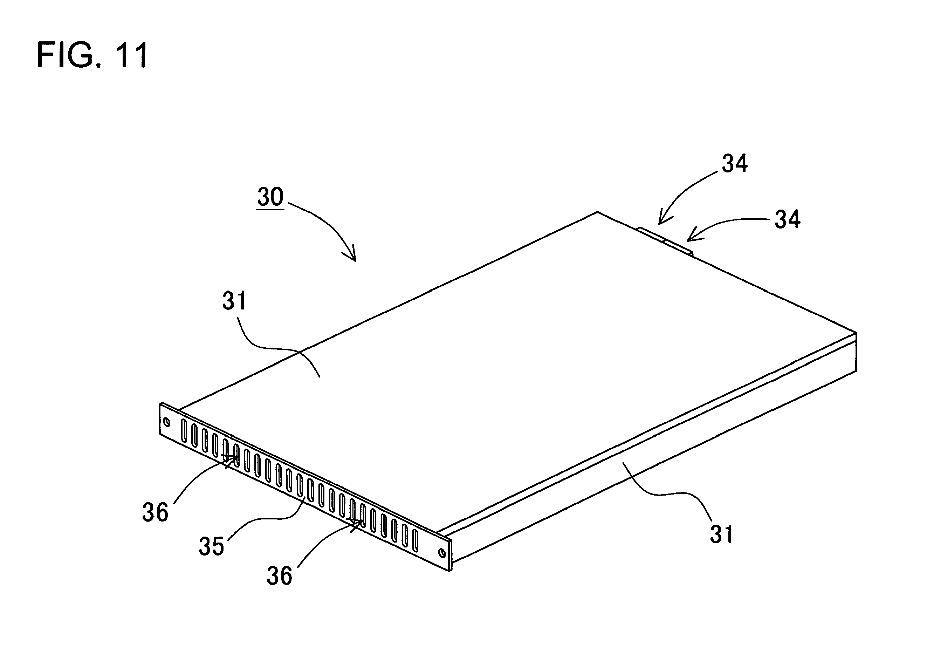

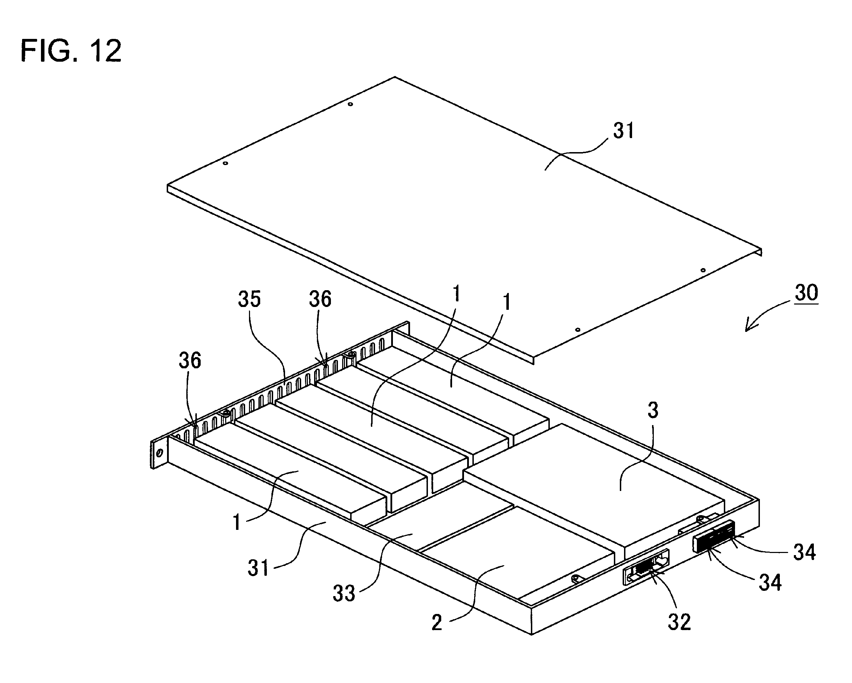

Figs. 11 and 12 show an uninterruptible power supply 30 that is loaded in the bottom section of the server case 91 in place of a rack server 51. This uninterruptible power supply 30 houses rechargeable batteries 1 made up of a plurality of battery cells 5 in the front part of the external case 31, and houses the DC/DC step-down converter 2 and DC/DC boost converter 3 in the back part. The charging and discharging control circuit (not illustrated) is implemented by an internally housed circuit board 33. The uninterruptible power supply 30 of the figures holds a plurality of rechargeable batteries 1 disposed in a planar arrangement. This uninterruptible power supply 30 can hold many rechargeable batteries 1 for a high charging capacity. Therefore, many blade servers 50 and rack servers 51 with high power consumption can be maintained in an operating state continuously for a long period during power outage.

Further, the uninterruptible power supply 30 of Fig. 12 is provided with cooling fans 34 at the back end of the external case 31, and heat generating elements such as switching device FETs in the DC/DC step-down converter 2 and DC/DC boost converter 3, rectifying diodes, and rechargeable batteries 1 are cooled by cooling fan 34 forced ventilation. The external case 31 is provided with a front panel 35 having numerous openings 36 to pass air ingested or discharged by the cooling fans 34 at the back of the external case 31. The air inside this uninterruptible power supply 30 is cooled by forced ventilation with the cooling fans 34 to allow uninterruptible power supply 30 temperature rise to be reduced.

In the server 90 shown in Fig. 1, the uninterruptible power supply 30 is loaded in the bottom section of the server case 91. However, this uninterruptible power supply can also be loaded in a top section of the server case above the enclosures, or in a mid-section of the server case between a plurality of vertically stacked enclosures.

In the server 90 described above, uninterruptible power supplies 10, 20 are loaded in place of blade servers 50 and power source units 60, or uninterruptible power supplies 30 are loaded in the server case 91 in place of rack servers 51 to allow server 90 operation to be maintained for a given period during power outage. A plurality of uninterruptible power supplies 10, 20, 30 are installed in the server 90, and during power outage, power er is supplied from each uninterruptible power supply 10, 20, 30 to the power supply line 43 of the blade servers 50 and rack servers 51 allowing server 90 operation to be maintained.

As shown by the broken lines in Fig. 2, the server 90 can also have power source units 80 installed in space 42 provided in the back of an enclosure 40. In the server 90 of the figure, the power source units 80 are disposed in space 42 in the upper part of an interconnect bay 41, but depending on interconnect bay layout and utilization, the power source units can also be disposed in space established at the bottom or sides of an interconnect bay. A power source unit 80 is provided with a connecting section 82 made up of connectors and connecting terminals that connect to an interconnect bay 41. When the power source unit 80 is loaded in a designated position, it is connected to the interconnect bay 41 via the connecting section 82. This server 90 has power source units 80 loaded in a removable manner in space 42 at its backside, or it can have uninterruptible power supplies 70 loaded in place of the power source units 80.

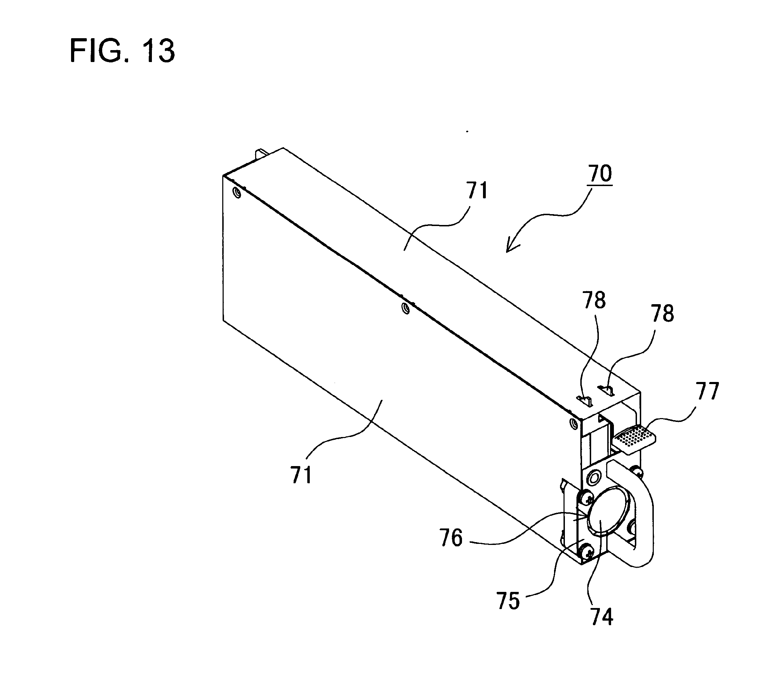

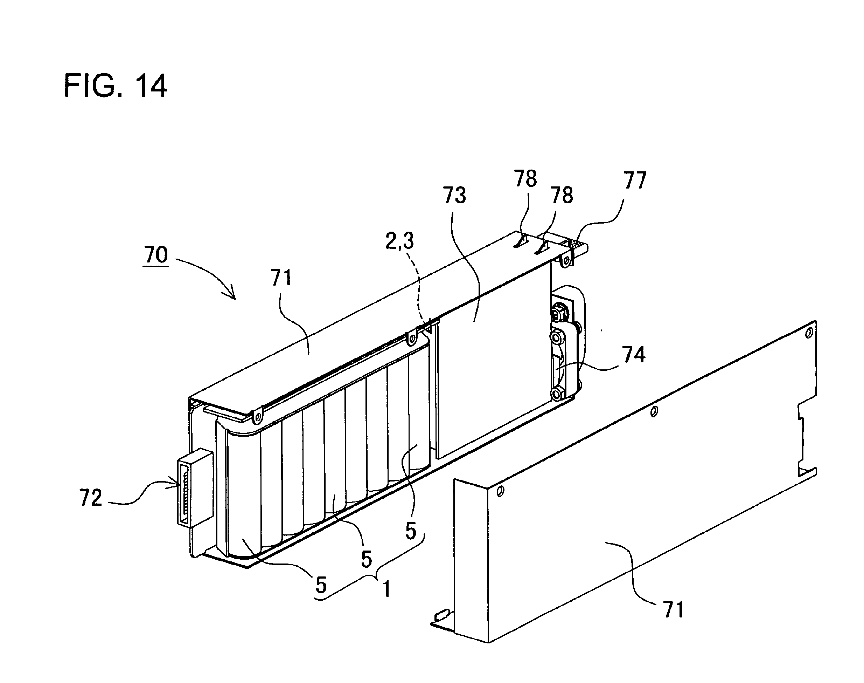

Figs. 13 and 14 show an uninterruptible power supply 70 that is loaded in place of a power source unit 80 in space 42 in the upper part of an interconnect bay 41 at the back of the server case 91. This uninterruptible power supply 70 houses rechargeable batteries 1, the DC/DC step-down converter 2, and the DC/DC boost converter 3 in an external case 71. The charging and discharging control circuit (not illustrated) is implemented by an internally housed circuit board 73. Further, this uninterruptible power supply 70 is provided with a cooling fan 74 at the front end of the external case 71 (the backside of the server case 91), and heat generating elements such as switching device FETs in the DC/DC step-down converter 2 and DC/DC boost converter 3, rectifying diodes, and rechargeable batteries 1 are cooled by cooling fan 74 forced ventilation. The front end of the external case 71 is provided with an opening 76 through the front panel 75 to pass air ingested or discharged by the cooling fan 74 at the front of the external case 71.

Further, the front end of the external case 71 of the figures is provided with a locking lever 77 to lock the uninterruptible power supply 70 in place in an enclosure 40. This locking lever 77 is made of flexible sheet-metal and locking hooks 78 flexibly protrude from the top of the external case 71. The locking hooks 78 interlock with locking catches (not illustrated) established in the enclosure 40 to prevent the uninterruptible power supply 70 from sliding out of the enclosure 40. This uninterruptible power supply 70 can be removed from the enclosure 40 by operating the locking lever 77 to release the locking hooks 78.

This uninterruptible power supply 70 is also provided with a connecting section 72 that connects to the interconnect bay 41 when the uninterruptible power supply 70 is loaded in place of a power source unit 80 in a designated position in the server case 91. The connecting section 72 is disposed at the back of the external case 71 and connects to the interconnect bay 41 when the uninterruptible power supply 70 is loaded in the enclosure 40. By installing the uninterruptible power supply 70 in place of a power source unit 80, the server 90 can be maintained in an operational state for given time during power outage. A plurality of uninterruptible power supplies 70 are installed in the server 90, and during power outage, power is supplied from each uninterruptible power supply 70 to the power supply line 43 of blade servers 50 and rack servers 51 allowing server 90 operation to be maintained. In Figs. 13 and 14, the uninterruptible power supply 70 has a box-shape similar to a board with some thickness, and one (narrow) side of that board-shape is disposed downward as the bottom surface. However, one of the wide sides of the uninterruptible power supply 70 can also be disposed downward, namely the orientation of Figs. 13 and 14 can be rotated 90° to allow the uninterruptible power supply 70 to be loaded in the available space 42.

**Claims**

1. A server uninterruptible power supply housed inside a server case (91), and provided with rechargeable batteries (1) that connect to the 12V DC power supply line (43) of the server (90) through DC/DC converters, that are charged by the power of the power supply line (43), and that supply power to the power supply line (43); the server (90) uninterruptible power supply comprising:

   a DC/DC boost converter (3) connected to the server (90) power supply line (43) that steps-up the power supply line (43) voltage to the charging voltage of the rechargeable batteries (1); rechargeable batteries (1) that are charged by the DC/DC boost converter (3) and have a specified voltage of 13V to 60V; a DC/DC step-down converter (2) that steps-down the rechargeable battery (1) voltage to the voltage of the power supply line (43) and outputs that voltage to the server (90) power supply line (43); and a charging and discharging control circuit (4) that controls the DC/DC boost converter (3) and the DC/DC step-down converter (2); **characterized in that** under a power-out condition of the commercial power source (95) that supplies power to the server (90), rechargeable battery (1) output voltage is stepped-down the to the voltage of the server (90) power supply line (43) via the DC/DC step-down converter (2), and that voltage is output to the power supply line (43) to maintain operation of the server (90).

2. The server uninterruptible power supply as cited in claim 1 wherein the server (90) has a plurality of blade servers (50) loaded in a removable manner in the server case (91), and the uninterruptible power supply (10) provided with an external case (11) housing the DC/DC boost converter (3), the rechargeable batteries (1), the DC/DC step-down converter (2), and the current detection circuit (4) can be loaded in a removable manner in the server case (91) in place of a blade server (50).

3. The server uninterruptible power supply as cited in claim 1 or 2 wherein the server (90) has a plurality of rack servers (51) loaded in a removable manner in the server case (91), and the uninterruptible power supply (30) provided with an external case (31) housing the DC/DC boost converter (3), the rechargeable batteries (1), the DC/DC step-down converter (2), and the current detection circuit (4) can be loaded in a removable manner in the server case (91) in place of a rack server (51).

4. The server uninterruptible power supply as cited in any one of the claims 1-3 wherein the server (90) has power source units (60, 80) loaded in a removable manner in the server case (91), and the uninterruptible power supply (20, 70) provided with an external case (21, 71) housing the DC/DC boost converter (3), the rechargeable batteries (1), the DC/DC step-down converter (2), and the current detection circuit (4) can be loaded in a removable manner in the server case (91) in place of a power source unit (60, 80).

5. The server uninterruptible power supply as cited in any one of the claims 1-4 wherein the charging and discharging control circuit (4) controls the DC/DC step-down converter (2) to be in a non-operating state when there is no power outage, and switches the DC/DC step-down converter (2) to the operating state when power outage occurs.

6. The server uninterruptible power supply as cited in claim 5 wherein the charging and discharging control circuit (4) detects a power-out-signal input from the server (90) to switch the DC/DC step-down converter (2) to the operating state.

7. The server uninterruptible power supply as cited in claim 5 wherein the charging and discharging control circuit (4) detects a power-out-signal to switch the DC/DC step-down converter (2) to the operating state, and the power-out-signal is sent from a power-out detection circuit (97) that is connected to the commercial power source (95) AC line (96) to detect power outage.

8. The server uninterruptible power supply as cited in claim 7 wherein the charging and discharging control circuit (4) detects a power-out-signal to switch the DC/DC step-down converter (2) to the operating state, and the power-out-signal is sent by wires or wirelessly from a power-out detection circuit (97) that is connected to the commercial power source (95) AC line (96) to detect power outage.

9. The server uninterruptible power supply as cited in claim 8 wherein the charging and discharging control circuit (4) switches the DC/DC step-down converter (2) to the operating state in a power outage, before the voltage in the power supply line (43) drops below a set voltage, to supply power to the power supply line (43).

10. The server uninterruptible power supply as cited in any one of the claims 1-9 wherein the time that the rechargeable batteries (1) maintain server (90) operation during power outage is from 2min to 10min.

11. The server uninterruptible power supply as cited in any one of the claims 1-10 provided with a connecting section (12, 22) on the backside that connects to an interconnect bay (41) established in the server case (91) when the uninterruptible power supply is loaded in place in the server case (91).

12. The server uninterruptible power supply as cited in any one of the claims 1-11 wherein the output current of the DC/DC boost converter (3) that charges the rechargeable batteries (1) is smaller than the output current of the DC/DC step-down converter (2).

13. The server uninterruptible power supply as cited in any one of the claims 1-12 wherein a locking lever (27) that locks the external case (21) in place is provided on the front end of the external case (21), and the uninterruptible power supply is prevented from sliding out of place via the locking lever (27).

14. The server uninterruptible power supply as cited in any one of the claims 1-13 wherein the charging and discharging control circuit (4) detects rechargeable battery (1) remaining capacity and controls the DC/DC boost converter (3) to continuously maintain rechargeable battery (1) remaining capacity within a set range.

15. The server uninterruptible power supply as cited in any one of the claims 1-14 wherein during rechargeable battery (1) discharge to supply power to the server (90), when rechargeable battery (1) remaining capacity drops to a minimum capacity, the charging and discharging control circuit (4) stops DC/DC step-down converter (2) operation to stop rechargeable battery (1) discharge.

# FIG. 1

FIG. 2

# FIG. 3

# FIG. 4

FIG. 5

# FIG. 6

FIG. 7

FIG. 8

FIG. 9

FIG. 10

FIG. 11

FIG. 12

EP 2 333 931 A2

# FIG. 13

EP 2 333 931 A2

FIG. 14

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006042495 A

- JP 2003309935 A